# EUROPÄISCHE PATENTSCHRIFT

(11) **EP 2 673 161 B1**
(45) Veröffentlichungstag und Bekanntmachung des Hinweises auf die Patenterteilung: **10.04.2019**
(21) Anmeldenummer: 12703975.8
(22) Anmeldetag: 06.02.2012
(51) Int. Cl.: B60L 11/18, B60R 16/03, G01R 31/36, H01M 10/42, H02J 7/00

(54) **VERFAHREN ZUM ÜBERWACHEN DER NUTZUNG EINES ELEKTROCHEMISCHEN ENERGIESPEICHERS IN EINEM KRAFTFAHRZEUG, SOWIE KRAFTFAHRZEUG**
METHOD FOR MONITORING THE USE OF AN ELECTROCHEMICAL ENERGY ACCUMULATOR IN A MOTOR VEHICLE AND MOTOR VEHICLE
PROCÉDÉ POUR CONTRÔLER L'UTILISATION D'UN ACCUMULATEUR D'ÉNERGIE ÉLECTROCHIMIQUE DANS UN VÉHICULE AUTOMOBILE ET VÉHICULE AUTOMOBILE

(30) Priorität: 08.02.2011 DE 102011010585
(43) Veröffentlichungstag der Anmeldung: 18.12.2013
(73) Patentinhaber: Audi AG, 85045 Ingolstadt (DE)
(72) Erfinder: RITTER, Bernd, 85113 Böhmfeld (DE)
(74) Vertreter: Herbst, Matthias Heinz
(86) Internationale Anmeldenummer: PCT/EP2012/000529
(87) Internationale Veröffentlichungsnummer: WO 2012/107198

(56) Entgegenhaltungen:
- WO-A1-2007/048367
- DE-T2- 69 332 925
- US-A- 5 942 878
- US-B1- 6 198 254

## Beschreibung

Die Erfindung betrifft ein Verfahren zum Überwachen der Nutzung eines elektrochemischen Energiespeichers (einer Batterie) in einem Kraftfahrzeug, in welchem ein elektrischer Antrieb durch den elektrochemischen Energiespeicher (mit elektrischem Strom) gespeist wird. In einem solchen Kraftfahrzeug wird der elektrochemische Energiespeicher beim laufenden Betrieb, wenn der elektrische Antrieb genutzt wird, entladen. Der elektrochemische Energiespeicher kann an einer Ladestation, zu der das Fahrzeug gefahren wird, aufgeladen werden. Wichtig ist der Ladezustand des elektrochemischen Energiespeichers. Als Ladezustand bezeichnet man den Grad der Ladung des Energiespeichers, und der Ladezustand wird üblicherweise in Prozent angegeben, wobei sich ein Ladezustand von 0 % auf einen vollständig entleerten (auf minimal möglich entladenen) elektrochemischen Energiespeicher bezieht und der Ladezustand von 100 % auf ein Geladensein des elektrochemischen Energiespeichers mit der maximalen Menge an Ladung. Typischerweise sind die Prozentwerte proportional zu der Einheit der Ladung (Coulomb) gegeben.

Ein elektrochemischer Energiespeicher wie z. B. eine Lithium-Ionen-Batterie verträgt es üblicherweise jedoch nicht, wenn der Ladezustand einen vorbestimmten Bereich verlässt, wenn also ein bestimmter Mindestladezustand (bei einem Betrieb des Fahrzeugs bzw. des elektrischen Antriebs) unterschritten wird oder ein bestimmter Höchstladezustand überschritten wird.

Der übliche Betriebsmodus des Kraftfahrzeugs ist daher ein solcher, in welchem der Ladezustand des elektrochemischen Energiespeichers in einem vorbestimmten Bereich bleibt. Da dieser Bereich üblicherweise so gewählt ist, dass noch eine gewisse Sicherheit gegeben ist, ist es in Ausnahmefällen aber möglich, den vorbestimmten Bereich zu verlassen. Hierzu ist es bekannt, für den Kraftfahrzeugführer die Möglichkeit einer Eingabe bereitzustellen (z. B. die Möglichkeit des Drückens eines speziellen Knopfes, einer besonderen Taste, oder über eine geführte Menübedienung), wobei vermittels der Eingabe ein zweiter Betriebsmodus des Kraftfahrzeugs eingenommen wird, in dem die Batterie weitergeladen wird.

Ähnliches ist auch denkbar für den Fall, dass ein Fahrzeugführer vor Fahrtantritt einen besonders hohen Ladezustand erreichen möchte: Dann wird der vorbestimmte Bereich nach oben hin verlassen.

Es besteht nun die Gefahr, dass der Fahrzeugführer die Sonderfunktion missbraucht und den elektrochemischen Energiespeicher dauerhaft schädigt.

Aus der DE 195 03 917 C2 ist eine elektronische Batterieüberwachungseinrichtung mit Traktionsbatterien für ein Elektrofahrzeug bekannt, in der in einem Datenspeicher batterierelevante Daten abgelegt werden. Die abgespeicherten Daten beinhalten unter anderem eine Information über die Anzahl von Lade- bzw. Entladezyklen, über Tiefentladungen, über Extremwerte usw. Es soll so eine manipulationsgesicherte Information über den Betriebsverlauf der Batterie während ihrer Lebensdauer gewonnen werden.

Hier ist jedoch kein Bezug dazu gegeben, dass ein Fahrzeugführer mit Absicht eine Tiefentladung herbeiführen kann.

Die US 5 942 878 A zeigt ein Verfahren zum Reduzieren des Memory-Effekts einer Batterie eines Elektrofahrzeugs. Zwischen jeweiligen Ladezyklen der Batterie wird erfasst, wie stark die Batterie entladen worden ist. Es wird eine Entladungstiefe ermittelt, welche aus einem Verhältnis der jeweiligen Entladung zur Kapazität der Batterie gebildet wird. Die Entladungstiefe wird mit wenigstens einem Schwellwert verglichen. Jedes Mal, wenn der Schwellwert unterschritten wird, wird ein Zähler hochgezählt. Sobald der Zähler einen vorgegebenen Wert überschreitet, wird die Batterie vollständig bei einem relativ geringen Entladestrom von 0,1 bis 0,2 Ampere entladen, um dem Memory-Effekt entgegenzuwirken.

Die DE 693 32 925 T2 zeigt eine Batterieüberwachungsschaltung. Diese dient dazu, zu ermitteln, wann eine überwachte Spannung einer Batterie kein gültiger Hinweis auf den Ladezustand der Batterie ist.

Es ist Aufgabe der vorliegenden Erfindung, die Nutzungsmöglichkeiten eines Kraftfahrzeugs mit elektrischem Antrieb, der aus einem elektrochemischen Energiespeicher gespeist wird, zu erweitern, indem die Grenze für die Nutzung des elektrochemischen Energiespeichers verschoben wird.

Die Aufgabe wird in einem Aspekt durch ein Verfahren mit den Merkmalen gemäß Patentanspruch 1 und in einem anderen Aspekt durch ein Kraftfahrzeug mit den Merkmalen gemäß Patentanspruch 5 gelöst.

Erfindungsgemäß wird somit gezählt, wie oft der zweite Betriebsmodus eingenommen wird, wie oft es also einen Zustand gibt, in dem der Ladezustand den vorbestimmten Bereich verlässt. Ein diesbezüglicher Zählwert wird in einem Datenspeicher des Kraftfahrzeugs abgelegt.

Dadurch, dass nunmehr eine aktive Zählung erfolgt und speziell auf das Einnehmen des zweiten Betriebsmodus des Kraftfahrzeugs bezogen ist, kann die diesbezügliche Information genutzt werden, um den Einsatz der Batterie zu optimieren.

Dieses Optimieren kann durch den Menschen selbst erfolgen, der z. B. den Zählwert in einem Datenspeicher ausliest oder auf eine Anzeigeeinrichtung zur Verfügung gestellt bekommt.

Erfindungsgemäß wird der Zählwert im Rahmen des Verfahrens mit einem Grenzwert verglichen, und bei Erreichen oder Überschreiten des Grenzwerts wird eine (naturgemäß über das Ablegen des Zählwerts hinausgehende) Folge ausgelöst, und zwar eben automatisch ausgelöst.

Die Erfindung beruht auf der Erkenntnis, dass insbesondere ein Verlassen des vorbestimmten Bereichs durch den Ladezustand für eine begrenzte Anzahl von Malen möglich ist, ohne dass der elektrochemische Energiespeicher übermäßig geschädigt wird. Man kann dann die Grenzen, die den vorbestimmten Bereich angeben, und zugehörig den Grenzwert für den Zählwert passend zueinander abstimmen derart, dass der elektrochemische Energiespeicher soweit als möglich nutzbar ist. Dies kann dergestalt erfolgen, dass der vorbestimmte Bereich eher eng gesetzt ist und der Grenzwert für den Zählwert relativ hoch gelegt wird; umgekehrt kann der vorbestimmte Bereich jedoch auch großzügiger als sonst gebildet sein, dafür kann aber der Grenzwert eher gering gewählt sein, um das Einnehmen des zweiten Betriebsmodus tatsächlich als Ausnahme vorzusehen.

Bei der Erfindung besteht die ausgelöste Folge darin, dass der zweite Modus nachfolgend entweder nicht mehr (selbsttätig durch das Kraftfahrzeug) eingenommen wird oder (durch eine Bedieneingabe) eingenommen werden kann oder nur noch nach einer zusätzlichen, über die sonst zum Einnehmen des zweiten Betriebsmodus notwendige Bedieneingabe hinausgehende Bedieneingabe einnehmbar ist bzw. eingenommen wird.

Alternativ oder zusätzlich kann die ausgelöste Folge bei Erreichen bzw. Überschreiten des Grenzwerts für den Zählwert auch in der Ausgabe eines akustischen, optischen oder haptischen Signals bestehen, das insbesondere die Wirkung eines Warnsignals haben kann, sei dies für die Insassen des Kraftfahrzeugs, insbesondere den Fahrzeugführer, oder eine Person, die in sonstiger Weise mit dem Fahrzeug zu tun hat, auch der Fahrzeugführer, solange er das Fahrzeug nicht führt, wenn er z. B. die Tür öffnet.

Durch das ausgelöste Signal werden somit Menschen darüber informiert, dass eine Grenze erreicht ist, die angibt, wie oft der Ladezustand den vorbestimmten Bereich verlassen darf, und dass nunmehr mit dem elektrochemischen Energiespeicher schonender umgegangen werden muss oder auch dieser langfristig ersetzt werden muss.

Auch unabhängig vom Ausgeben des Zählwertes kann es ein Ausgabesignal ergeben, insbesondere kann der Zählwert selbst auf einer Ausgabeeinrichtung ausgegeben werden, sei dies immer (beim Betrieb des Fahrzeugs), auf Abruf oder zumindest beim Einnehmen des zweiten Modus, damit der Fahrzeugführer weiß, wie sehr er sich dem Grenzwert nähert.

Bevorzugt wird das erfindungsgemäße Verfahren eingesetzt in einem Kraftfahrzeug, bei dem der zweite Modus nur aufgrund einer Bedieneingabe zur Einnahme des zweiten Modus, also aufgrund einer expliziten Bedieneingabe, eingenommen wird. Hier gewinnt das Ablegen des Zählwertes den Sinn, den Fahrzeugführer über seine eigenen Handlungen (Betätigen der Bedieneingabe) informieren zu können.

Erfindungsgemäß umfasst das Einnehmen des zweiten Modus, dass der elektrische Energiespeicher unter eine Untergrenze tiefentladen wird. So ist es auch möglich, die Erfindung alternativ oder zusätzlich dann zu realisieren, wenn im zweiten Betriebsmodus der elektrochemische Energiespeicher über eine Obergrenze übermäßig aufgeladen wird, die Problematik der Tiefentladung stellt sich jedoch insbesondere bei einer Fahrt des Kraftfahrzeugs, wenn also der Betriebsmodus gleichzeitig ein Fahrtmodus ist; denn wenn die Batterie bis zu einer Mindestgrenze entladen ist, kann ein Fahrerwunsch bestehen, die Fahrt fortzusetzen, so dass eine Tiefentladung wünschenswert werden kann.

Das erfindungsgemäße Kraftfahrzeug weist einen elektrischen Antrieb auf sowie einen elektrochemischen Energiespeicher zur Speisung dieses elektrischen Antriebs mit elektrischem Strom, wobei dem elektrochemischen Energiespeicher ein Soll-Mindestladezustand zugeordnet ist, also ein Ladezustand, der definitionsgemäß mindestens gegeben sein soll. Das Kraftfahrzeug weist zudem eine Einrichtung zum Bewirken des Unterschreitens des Soll-Mindestladezustands auf, wobei diese Einrichtung zum Bewirken des Unterschreitens z. B. als Softwaremodul in einer Steuereinrichtung zum Ansteuern des elektrischen Antriebs umgesetzt sein kann, die den Ladezustand des elektrochemischen Energiespeichers erfasst oder berechnet und in Abhängigkeit von dem Ladezustand Steuerbefehle an den elektrischen Antrieb gibt, der dann den elektrischen Strom zieht. Das erfindungsgemäße Kraftfahrzeug ist gekennzeichnet durch eine Einrichtung zum Zählen, wie oft der Soll-Mindestladezustand unterschritten wird, und zum Speichern eines zugehörigen Zählwerts. Die Einrichtung kann durch zwei Teileinrichtungen bereitgestellt sein, wobei die Teileinrichtung zum Zählen an die Einrichtung zum Bewirken des Unterschreitens angekoppelt sein kann, z. B. ein zugehöriges Softwaremodul in der Steuereinrichtung des Kraftfahrzeugs sein kann, wohingegen die Teileinrichtung zum Speichern des zugehörigen Zählwertes eine herkömmliche Datenspeichereinrichtung sein kann.

Die zum erfindungsgemäßen Verfahren ausgeführten Vorteile gelten entsprechend für das erfindungsgemäße Kraftfahrzeug. Auch die bevorzugten Ausführungsformen des erfindungsgemäßen Verfahren werden bevorzugt durch das erfindungsgemäße Kraftfahrzeug realisiert.

Insbesondere ist bei.dem erfindungsgemäßen Kraftfahrzeug bevorzugt vorgesehen, dass ein Bewirken des Unterschreitens des Soll-Mindestladezustands nach Erreichen oder Überschreiten einer Grenze für den Zählwert automatisch blockiert wird. Das Blockieren kann einfach darin bestehen, dass die zugehörige Steuereinrichtung nicht mehr das Unterschreiten des Soll-Mindestladezustands bewirkt, wenn die Grenze bzw. der Grenzwert für den Zählwert erreicht ist. Es kann aber auch sein, dass ein gesondertes Hardware- oder Softwaremodul den Zählwert aus der (Teil-) Einrichtung zum Speichern mit dem Grenzwert vergleicht und dann ein entsprechendes Signal, z. B. in Form von einer gesetzten Flag, an die Einrichtung zum Bewirken des Unterschreitens sendet, die dann weiter nichts mehr zulässt.

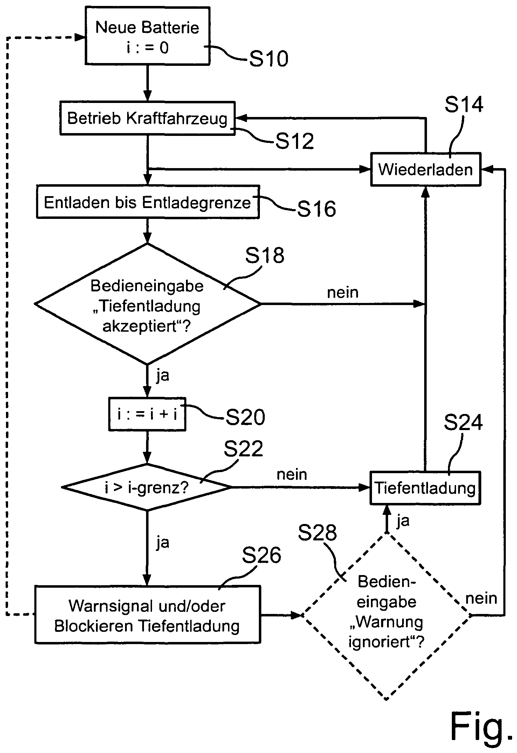

Nachfolgend wird eine bevorzugte Ausführungsform der Erfindung unter Bezug auf die Zeichnung beschrieben, in der die einzige Figur ein Flussschaubild zur Erläuterung einer Ausführungsform des erfindungsgemäßen Verfahrens ist.

Ein Verfahren zum Überwachen der Nutzung einer Batterie in einem Elektrofahrzeug beginne vorliegend in Schritt S10 damit, dass die Batterie neu ist, z. B. auch weil das Fahrzeug selbst neu ist, und ein Zähler i wird auf Null gesetzt.

Nachfolgend wird in Schritt S12 mit dem Betrieb des Kraftfahrzeugs begonnen. Beim laufenden Betrieb des Kraftfahrzeugs wird die Batterie entladen. Sie wird entweder in Schritt S14 wieder geladen, bevor sie die Entladegrenze erreicht hat. Vorliegend ist von Interesse, was passiert, wenn sie in Schritt S16 bis zur Entladegrenze entladen wurde. Die Entladegrenze ist eine solche Grenze, die im Normalbetrieb nicht unterschritten werden soll, weil die Batterie bei weiterer Entladung sonst Schaden nimmt. Diese Tiefentladung soll vorliegend aber durch eine Bedieneingabe ausnahmsweise zugelassen werden können, z. B. drückt der Fahrzeugführer eine Bedientaste hierfür. In Schritt S18 wird geprüft, ob eine solche Bedieneingabe erfolgt ist. Solange dies nicht der Fall ist, wird die Batterie in Schritt S14 wieder geladen, und der Betrieb des Kraftfahrzeugs wird gemäß Schritt S12 dann fortgesetzt, so dass die Batterie später wieder neu entladen wird etc. Im Falle, dass aber eine Bedieneingabe erfolgte, wird in Schritt S20 der Zähler i um Eins hochgesetzt.

In Schritt S22 wird dann überprüft, ob der Zähler einen Grenzwert i-grenz überschritten hat. Solange dies nicht der Fall ist, wird gemäß dem Wunsch des Fahrzeugführers (also seiner Bedieneingabe) eine Tiefentladung in Schritt S24 durchgeführt. Die Batterie wird erst nachfolgend in Schritt S14 wiedergeladen, der Betrieb des Fahrzeugs in Schritt S12 fortgesetzt etc. Falls aber der Grenzwert i-grenz überschritten wird, wird in Schritt S22, also nachfolgend der Bedieneingabe, zum Schritt S26 übergegangen: Es wird ein Warnsignal abgegeben und/oder die weitere Tiefentladung wird blockiert. Der Hintergrund besteht darin, dass die Tiefentladung nicht übermäßig häufig erfolgen sollte, wofür eben der Grenzwert i-grenz definiert ist. Der Fahrzeugführer wird durch das Warnsignal informiert, dass er eine übermäßige Anzahl von Malen die Bedieneingabe vorgenommen hat, wenn die Entladegrenze erreicht wurde. Durch das Blockieren der Tiefentladung wird eine dauerhafte Schädigung der Batterie verhindert. Man kann dann zum Wiederladen der Batterie gemäß Schritt S14 übergehen. Optional kann in Schritt S28 geprüft werden, ob eine weitere Bedieneingabe erfolgt, z. B. an einer weiteren Bedientaste. Der Fahrzeugführer kann bei dieser Option angeben, dass er die Warnung wahrgenommen hat, aber dennoch eine Tiefentladung wünscht. Dann wird zum Schritt S24 übergegangen, es erfolgt dann trotz des Überschreitens des Grenzwerts i-grenz die Tiefentladung, und erst später erfolgt das Wiederladen.

Je nach Setzung des Grenzwertes i-grenz kann es auch nach Schritt S26 sinnvoll sein, die Batterie zu ersetzen und somit wieder zum Schritt S10 überzugehen.

Dies kann optional auch (wie in der Figur nicht dargestellt) von dem Überschreiten eines weiteren Grenzwerts für den Zähler i abhängig gemacht werden. Genauso kann dies auch von einer Zählung abhängig gemacht werden, wie oft die Bedieneingabe erfolgt, dass die Warnung ignoriert wird, also wie oft die Frage im Schritt 28 mit "Ja" beantwortet wurde.

Durch die vorliegende Erfindung kann die Entladegrenze höher oder tiefer gesetzt werden, als sie sonst üblich ist, wenn der Grenzwert i-grenz nur passend gewählt ist. Bei hoher Entladegrenze kann ein größerer Grenzwert i-grenz gewählt werden, bei niedriger Entladegrenze sollte die Tiefentladung die absolute Ausnahme bleiben und der Grenzwert i-grenz klein sein. Im Einzelfall lässt sich dies auf die Eigenschaften der Batterie abstimmen, gegebenenfalls lassen sich die Entladegrenze und der Grenzwert i-grenz auch in Abhängigkeit von Batterieparametern festlegen. Solche Batterieparameter können z. B. bei Austausch der Batterie neu festgelegt werden, eventuell von einem Speicher an der Batterie ausgelesen werden. Vorliegend können die Entladegrenze und der Grenzwert i-grenz jedoch auch in Abhängigkeit von einer bestimmten Batterie zugeordneten Batterieparametern wie z. B. einen Alterungszustand der Batterie beschreibenden Parametern jeweils neu festgelegt werden. Hierbei kann sich der Kreis wieder schließen und bei der Festlegung des Grenzwert des i-grenz auch der Zähler i selbst berücksichtigt werden, wenn gleichzeitig weitere Parameter in einer funktionellen Abhängigkeit zu diesem gesehen werden. Beispielsweise kann zusätzlich die Gesamtbetriebsdauer berücksichtigt werden. Die Entladegrenze und der Grenzwert i-grenz können somit sowohl von der speziellen Batterie abhängig als auch dynamisch jeweils neu festgelegt werden.

## Patentansprüche

1. Verfahren zum Überwachen der Nutzung eines elektrochemischen Energiespeichers in einem Kraftfahrzeug, in welchem ein elektrischer Antrieb durch den elektrochemischen Energiespeicher gespeist wird, wobei in einem ersten Betriebsmodus des Kraftfahrzeugs der Ladezustand des elektrochemischen Energiespeichers in einem vorbestimmten Bereich bleibt und in einem zweiten Betriebsmodus des Kraftfahrzeugs der Ladezustand den vorbestimmten Bereich verlässt, bei dem der elektrochemische Energiespeicher in dem zweiten Modus unter eine Untergrenze tiefentladen wird (S24),
**dadurch gekennzeichnet, dass**
- gezählt wird, wie oft der zweite Betriebsmodus eingenommen wird und ein Zählwert (i) in einem Datenspeicher des Kraftfahrzeugs abgelegt wird;
- der Zählwert (i) mit einem Grenzwert (i-grenz) verglichen wird (S22) und bei Erreichen oder Überschreiten des Grenzwerts eine Folge ausgelöst wird (S26);
- die Folge darin besteht, dass der zweite Modus nachfolgend nicht mehr eingenommen wird oder eingenommen werden kann oder nur noch nach einer zusätzlichen Bedieneingabe (S28) einnehmbar ist.

2. Verfahren nach Anspruch 1,
**dadurch gekennzeichnet, dass**
die Folge in der Ausgabe (S26) eines akustischen, optischen oder haptischen Signals besteht.

3. Verfahren nach Anspruch 1 oder 2,
**dadurch gekennzeichnet, dass**
der Zählwert (i) auf einer Ausgabeeinrichtung bei einem Betrieb des Kraftfahrzeugs immer, auf Abruf oder beim Einnehmen des zweiten Modus aufgegeben wird.

4. Verfahren nach einem der vorhergehenden Ansprüche , eingesetzt in einem Kraftfahrzeug, bei dem der zweite Modus nur aufgrund einer Bedieneingabe (S18) eingenommen wird.

5. Kraftfahrzeug mit einem elektrischen Antrieb und einem elektrochemischen Energiespeicher zur Speisung desselben mit elektrischem Strom, wobei dem elektrochemischen Energiespeicher ein Soll-Mindestladezustand zugeordnet ist, und mit einer Einrichtung zum Bewirken des Unterschreitens des Soll-Mindestladezustands derart, dass der elektrochemische Energiespeicher unter eine Untergrenze tiefentladen wird (S24),
**gekennzeichnet durch**
eine Einrichtung zum Zählen, wie oft der Soll-Mindestladezustand unterschritten wird, und zum Speichern eines zugehörigen Zählwerts (i), wobei die Einrichtung dazu ausgelegt ist, den Zählwert (i) mit einem Grenzwert (i-grenz) zu vergleichen (S22) und bei Erreichen oder Überschreiten des Grenzwerts eine Folge auszulösen (S26), wobei die Folge darin besteht, dass der Soll-Mindestladezustand nachfolgend nicht mehr unterschritten wird oder unterschritten werden kann oder nur noch nach einer zusätzlichen Bedieneingabe (S28) unterschreitbar ist.

6. Kraftfahrzeug nach Anspruch 5,
**dadurch gekennzeichnet, dass**
ein Bewirken des Unterschreitens des Soll-Mindestladezustands nach Erreichen oder Überschreiten einer Grenze (i-grenz) für den Zählwert (i) automatisch blockiert wird.

## Claims

1. Method for monitoring the use of an electrochemical energy storage device in a motor vehicle, in which the electrochemical energy storage device supplies electric power to an electric drive, wherein in a first operating mode of the vehicle the charging status of the electrochemical energy storage device remains in a prespecified range, and in a second operating mode of the vehicle the charging status departs from the prespecified range, in which the electrochemical energy storage device in the second mode is deeply discharged to below a lower limit (S24),
**characterised in that**
- it is counted how often the second operating mode is adopted and a count value (i) is saved in a data memory of the motor vehicle;
- the count value (i) is compared with a limit value (i-grenz) (S22) and when the limit value is reached or exceeded a sequence is triggered (S26);
- in the sequence the second mode can subsequently no longer be adopted or can be adopted or can only be adopted after an additional entry (S28).

2. Method according to claim 1,
**characterised in that**
the sequence consists of outputting (S26) an acoustic, visual or haptic signal.

3. Method according to claim 1 or 2,
**characterised in that**
the count value (i) is always posted on an output device during the operation of the motor vehicle, on demand or when adopting the second mode.

4. Method according to any of the preceding claims, used in a motor vehicle, in which the second mode is only adopted on the basis of an entry (S18).

5. Motor vehicle with an electric drive and an electrochemical energy storage device for supplying electrical current to the electric drive, wherein a nominal minimum charging status is assigned to the electrochemical energy storage device, and with a device for producing an undershoot of the nominal minimum charging status, such that the electrochemical energy storage device is deeply discharged below a lower limit (S24),
**characterised by**
a device for counting how often the nominal minimum charging status has been undershot, and for storing a corresponding count value (i), wherein the device is configured to compare the count value (i) with a limit value (i-grenz) (S22) and to trigger a sequence on reaching or exceeding the limit value (S26), wherein in the sequence the nominal minimum charging status is subsequently no longer undershot or can be undershot or can only be undershot after an additional entry (S28).

6. Motor vehicle according to claim 5,
**characterised in that**
an undershoot of the nominal minimum charging status is automatically blocked when a limit value (i-grenz) for the count value (i) has been reached or exceeded.

## Revendications

1. Procédé de surveillance de l'utilisation d'un accumulateur d'énergie électrochimique dans un véhicule automobile, dans lequel une propulsion électrique est alimentée par l'accumulateur d'énergie électrochimique,
dans lequel, dans un premier mode de fonctionnement du véhicule automobile, l'état de charge de l'accumulateur d'énergie électrochimique reste dans une plage prédéterminée et, dans un deuxième mode de fonctionnement du véhicule automobile, l'état de charge quitte la plage prédéterminée, l'accumulateur d'énergie électrochimique dans le deuxième mode étant profondément déchargé (S24) sous une limite inférieure,
**caractérisé en ce que**
- on compte le nombre d'occurrences du deuxième mode de fonctionnement et on enregistre une valeur de comptage (i) dans une mémoire de données du véhicule automobile ;
- on compare (S22) la valeur de comptage (i) à une valeur limite (i-grenz) et on déclenche (S26) une conséquence si la valeur limite est atteinte ou dépassée ;
- la conséquence consiste à ne plus passer ou ne plus pouvoir passer dans le deuxième mode ou à ne pouvoir passer dans le deuxième mode qu'après une entrée de commande supplémentaire (S28).

2. Procédé selon la revendication 1, **caractérisé en ce que** la conséquence consiste à fournir en sortie (S26) un signal acoustique, optique ou tactile.

3. Procédé selon la revendication 1 ou 2, **caractérisé en ce que** la valeur de comptage (i) est toujours délivrée en sortie, sur demande ou lors du passage dans le deuxième mode, sur le dispositif de sortie lors d'un fonctionnement du véhicule automobile.

4. Procédé selon l'une quelconque des revendications précédentes, utilisé dans un véhicule automobile, dans lequel on passe dans le deuxième mode seulement en raison d'une entrée de commande (S18).

5. Véhicule automobile avec une propulsion électrique et un accumulateur d'énergie électrochimique destiné à alimenter en courant électrique ladite propulsion électrique, un état de charge minimale de consigne étant associé à l'accumulateur d'énergie électrochimique, et avec un dispositif destiné à faire passer en dessous de l'état de charge minimale de consigne de telle sorte que l'accumulateur d'énergie électrochimique est profondément déchargé (S24) sous une limite inférieure,
**caractérisé par** un dispositif destiné à compter combien de fois on est passé en dessous de l'état de charge minimale de consigne et à mémoriser une valeur de comptage (i) associée,
dans lequel le dispositif est conçu pour comparer (S22) la valeur de comptage (i) à une valeur limite (i-grenz) et déclencher (S26) une conséquence si la valeur limite est atteinte ou dépassée, laquelle conséquence consiste à ne plus passer ou ne plus pouvoir passer en dessous de l'état de charge minimale de consigne ou à ne pouvoir passer en dessous de l'état de charge minimale de consigne qu'après une entrée de commande supplémentaire (S28).

6. Véhicule automobile selon la revendication 5, **caractérisé en ce qu'**un passage en dessous de l'état de charge minimale de consigne est automatiquement bloqué après avoir atteint ou dépassé une limite (i-grenz) pour la valeur de comptage (i).
